# EUROPEAN PATENT APPLICATION

(11) **EP 1 355 213 A2**
(43) Date of publication of application: **22.10.2003**
(21) Application number: 03252452.2
(22) Date of filing: 17.04.2003
(51) Int. Cl.: G05D 23/275

(54) **Control device with sensor**

(30) Priority: 17.04.2002 GB 0208790
(71) Applicant: Diamond H Controls Limited, Norwich, Norfolk, NR6 6AH (GB)
(72) Inventor: Tooke, John Edwin, Drayton Norwich NR8 6BA (GB); Lofthouse, Randolph, Dereham Norfolk NR20 4NE (GB)
(74) Representative: Flynn, Michael Joseph

(57) **Abstract**

A control device (1) comprises a bimetallic element, having an active leg (5) on which there is mounted a heater assembly (11), and a sensor circuit adapted to drive one or more circuits associated with at least one heating element thereof The heater assembly is in intimate thermal contact with the active leg of said bimetallic element and the sensor circuit includes at least one sensor element (101,110) to which there is associated a specific thermal switching function so as to more accurately determine temperature limits or values associated with an appliance to be controlled by the control device. The sensor circuit may comprise a multi-circuit sensor element, each sensor element being adapted to drive one or more circuits associated with the heater assembly so as to effect deflection of the active leg of the bimetallic element to which the heater assembly is mounted. By associating activation of the driven heater assembly circuits with deflection of the bimetallic element, a switching function is realised over a range of temperatures. In one embodiment an over-limit energy regulator is provided. In a further embodiment, a unitary temperature control device having multiple circuits each of which is switchable at discrete temperatures is realised. A method of manufacturing a thermally limited heater assembly is also provided.

## Description

### Field of the Invention

The present invention relates to a control device such as a temperature limiter or an energy regulator of the kind which incorporates a bimetal element and more particularly relates to domestic or commercial heating systems or boilers and to cooking appliance controls which regulate the operating temperature of cooker hot plates, hobs, grills, ovens and the like.

### Background to the Invention

It has long been common to utilise temperature-dependent deflection of a bimetallic element to fulfil a regulating function in a wide range of equipment, for example in domestic appliances such as cookers. The bimetallic element is heated by a heating element in intimate contact with an active leg of the bimetallic element which is housed within the regulator, specifically for that purpose. Typically, the deflection is used to actuate a switch mechanism to open and close electrical contacts for the supply of power to the load. The setting at which the bimetal strip actuates the switch mechanism is determined by a rotary cam arrangement.

The heating element is normally energised through the control device from the same source as that used to power the load, that is, the mains electrical supply. Thus, when the load is energised the heating element begins heating the active leg of the bimetallic element. When the temperature-dependent deflection occurs, the power supply to the load and to the heating element is broken and the heating element cools. When the active leg of the bimetallic element returns to its normal (cold) position, the switching mechanism re-establishes (makes) the circuit bringing the power supply back into connection with the load and the heater. The heater is energised again and so the cycle recommences. When the regulator is combined with a limiter to protect the glass of a ceramic hob top, a further problem occurs when the energy regulator is turned down from full power to control a high percentage output level setting, say 70 - 80% of full output. In this arrangement it is feasible to loose a complete or part of the heating cycle as a result of interception from the limiter. For example, where the load is a heating surface on a domestic cooker ceramic hob, the thermal gradient between the load heating element, a limiting device and the top of the heating surface adversely affects the control of the heating surface resulting in cyclic operation and preventing full power input to the load. This often detracts from optimum cooking performance.

Where the control device is an energy regulator for a ceramic hob of a domestic electric cooker, the input power to the hob when the regulator is turned to the "full" position should be 100%. In practice, a hob temperature limiter will prevent full power being attained before safe "top of glass" temperature is reached and results in a cyclic mode of operation. The cycling can occur as much as 200C below the safe top of glass operating temperature, although this figure is dependent on the position of the limiter relative to the hob heating element.

The current state of the art for control of ceramic hotplates utilises an energy regulator in series with a ceramic limiter. The devices are standalone controls, which are expensive to manufacture. The limiter is also fragile and wastage is high as are rates of warrantee work. The limiter tends to be difficult to calibrate and sensitive to calibration changes during installation. Manufacturing calibration deviations are in the order of +/- 25C.

There are many known techniques for detecting the presence or absence of a heat source or the temperature at a particular site, generating a signal and feeding that signal to a control device or control system.

When detecting for the presence of relatively high temperatures of say +500C, those temperatures and an aggressive environment, such as that on a cooker hob, remove the most common (and therefore cheapest) high temperature detection schemes from consideration.

Each of the known systems have disadvantages associated with reliability, interfacing with other devices or systems and cost which are immediately apparent to those skilled in the art.

Calibration of sensors due to manufacturing inconsistencies and the sensitivity of known sensors to components to which they are connected also increase the end costs to a user. Devices which are self-calibrating or can be manufactured to have specific response characteristics are desirous but often unrealisable.

Exemplifying of the prior art control devices is an electro-mechanical thermostat device such as that produced by the present applicant (Diamond H Controls Limited, 40TH Series thermostat controls). Hydraulic expansion of a fluid with a probe is used to produce a mechanical action within a control housing. The effect of the mechanical action (which is small) is regulated by a cam surface to adjust the sensitivity of a spring switch mechanism to the action produced by the fluid expansion. In such devices the temperature range over which accurate detection and/or regulation is relatively small (say 150 - 350C) and response times may be slow. More particularly, the component count and the manufacturing tolerances for the hydraulic circuit within such controllers tends to make them particularly expensive.

The term "glass" and "ceramics material" as used hereinbelow are directed to a vitrified compound having the requisite characteristic to effect the required control within a control device. Examples include doped glass including boro-silicate glass, overglaze and enamel, however, it is to be understood that no limitation is to be implied by the exemplary materials referred to above.

A common form of heating element for such a regulator is a ceramic substrate thick film heater. Current methods of making electrical connection to ceramic substrate heaters have shortcomings in maintaining a reliable electrical connection at high ambient temperatures and heater power levels. Soldered connections are difficult to fuse (e.g. Ag to CuNi) and creep and melt points of HMP solder limit maximum safe operating temperatures. Mechanical rivet/tape compression types are prone to intermittent, i.e. high resistance, connection. Spring wiper connection types suffer from stress relaxation as well as friction and wear. The magnitude and degree of change of force experienced can adversely affect control performance.

A new low cost method of ensuring a reliable mechanical and electrical connection to such substrate heaters has now been developed.

European Patent Specification No EP 0 682 352 A discloses a control device being an energy regulator of the type considered and the teaching thereof is incorporated herein by reference.

It is an object of the present invention to seek to alleviate the disadvantages associated with such prior art control devices and to provide an improved control device with sensor.

It is a particular object of the invention to associate a family of sensors having improved attributes of connectivity, reliability, repeatability, general robustness and cost with existing control device structures and mechanisms to provide improved temperature control devices having a reduced component count which are reliable, robust and cost effective.

It is also an object of the invention to provide a modified energy regulator substrate heater assembly so as to increase the functionality of known energy regulators.

It is a further object of the invention to provide an improved method of manufacture of substrate heater assemblies to provide increased functionality using relatively low cost, existing technologies but which is easily manipulated to manufacture a variety and/or range of assemblies having differing characteristics.

It is yet a further object of the present invention to provide an efficient method of maintaining temperature within an appliance, particularly a cooking appliance, and to provide safety mechanisms to protect the appliance from damage due to excessive heat and to protect users with appropriate warnings.

### Summary of the Invention

In its broadest aspect, the present invention provides a control device having a switch mechanism deflectable from one position to another under the action of a thermal sensor which comprises first and second conductors separated by a ceramics material which is responsive to heat whereby a parameter of the ceramics material undergoes a step change between a first temperature range and a second temperature range.

Particularly, it is the resistance of the material which undergoes said step change, whereby the ceramics material has a first resistance value at temperatures consistent with the absence of applied heat or an acceptable operating level of applied heat and a second resistance value in the presence of temperatures consistent with a maximum or near maximum required output of a heating element or heating surface.

Most particularly, the resistance of the material decreases as the temperature increases, whereby, in absence of applied heat, the resistance of the sensor is the electrical equivalent of an open circuit and, in presence of elevated temperatures corresponding to the maximum or near maximum required output, the sensor resistance is equivalent to a closed or short circuit.

Preferably, the sensor is in close thermal contact with a heating surface for which the over-limit temperature is to be monitored.

Advantageously, the sensor is embedded within the heating surface.

In a preferred construction of sensor, the first conductor is a common conductor disposed from two or more second conductors, each second conductor being profiled or positioned to "switch" to or electrically communicate with the common conductor at discrete temperature value.

The discrete temperatures are preferably disparate temperature values. Advantageously, one of the values is in the range of 500 - 750C and another is in the range 70 - 120C.

A transition temperature is defined as the temperature range over which the step change from a first temperature range at open circuit to a second temperature range at a low resistance occurs and is in the region of 100C.

Preferably, the midpoint of the transition temperature is adjustable by conductor and/or conductor path construction and ceramic material selection between 300C and 600C.

Preferably, the ceramic material is a doped glass which begins to conduct within the temperature range 350C to 700C.

Additionally or alternatively, a low transition temperature is defined as the temperature range over which the step change occurs and has a transition temperature in the region of 70 - 120C. Intermediate temperature sensors may also be provided.

According to one arrangement of the present invention, switch mechanism comprises a bimetallic element, having an active leg on which there is mounted a heater assembly including a heating element, and a sensor adapted to drive one or more circuits associated with the heating element, the or each heater assembly circuit being in intimate thermal contact with the active leg of said bimetallic element, the sensor including at least one sensor element to which there is associated a specific thermal switching function so as to more accurately determine temperature limits or values associated with the appliance to be controlled or the use thereof.

The above arrangement is adaptable as a thermostat controller which obviates a hydraulic circuit.

The sensor element is connected to a heater circuit on the heater assembly so that when a closed circuit temperature is attained, the heater circuit is energised and the active leg of the bimetallic element is deflected a predetermined distance.

Using this form of construction, which includes a bimetallic element having a compensation limb attached to an adjustment cam, ambient compensation is automatically achieved whilst substantially eliminating deflection constant variations.

The design therefore has the advantages of giving optimum compensation, elimination of bimetal constant variation problems and also enabled a low profile design of control to be considered.

Advantageously, the heater assembly comprises at least one heater circuit comprising two terminal conductors between which there is laid a resistive track which when energised radiates sufficient heat to deflect the active leg of the bimetallic element a pre-determined distance, which is related to the rating of the track. The term "rating" as used herein is consistent with the wattage of the heater formed by the resistive track which in turn is related to the applied voltage and the actual resistance between the terminal conductors.

The heater circuit advantageously includes a ceramics material overglaze to protect the resistive track and, more particularly, to realise a thermal limiter within the heater circuit. This arrangement may be utilised to "short out" the heater should a thermal limit be reached, advantageously to provide "fail-safe" modes.

Particularly, a sensor comprises a multi-circuit sensor element, each sensor element being adapted to drive one or more circuits associated with the heater assembly so as to effect deflection of the active leg of the bimetallic element to which the heater assembly is mounted. By associating activation of the driven heater assembly circuits with deflection of the bimetallic element, a switching function is realised over a range of temperatures.

In one preferred embodiment of the invention the control device comprises a thermal limiter comprising a bimetallic element having an active primary limb on which there is mounted a heating element which is arranged in series connection with a sensor of the type comprising at least two terminals separated by a ceramics material, the ceramics material having a first resistance value associated with a safe thermal range and a second resistance value disparate from the first and associated with an over-limit temperature, the second resistance value being such to effectively form a closed circuit, thereby energising the heating element and deflecting the bimetallic element.

In a further aspect of the present invention there is provided a method of manufacturing a heater assembly of the type described, the method comprising:
selecting a substrate;
forming at least first and second conductors and associated terminals on the substrate;
defining between said first and second conductors, at least one heater element;
overlaying said at least one heater element with a ceramics material which is responsive to heat so that a parameter of said ceramics material undergoes a step change between a first temperature range and a second temperature range; and
firing the ceramics material.

Conveniently, the or each heater element is defined by screen printing at least one resistive track between, and connecting, the at least first and second conductors.

Advantageously, the number and size of the resistive tracks is altered by changing the template used for screen printing the tracks.

Optionally, a resistive track is laid between the at least two conductor terminals, the number and size of track being defined by etching or, more preferably, laser trimming the printed track.

It will be readily appreciated that a heater element of the heater assembly or an energising circuit thereof may be provided in a parallel connection with the or each thermal sensor so that in absence of applied heat the energising circuit is open and the control device cannot be energised and in the presence of elevated temperatures, the circuit is "made" allowing the control device to be energised.

Preferably, the bimetallic element comprises primary and compensator limbs which are integral, for example formed by splitting a bimetal strip lengthways from one end along a part of its length. This bimetal strip can be supported at its unsplit end. The unsplit end of such a split bimetal strip can be supported on a pivot.

It is known from European Patent Specification No. EP 0 194 512 A to operate a double pole secondary switch by means of an auxiliary cam arrangement acting upon a switch contact arm ganged by means of a ganging bar to a second contact arm. However, this does not permit the second contact arm to switch independently of the contact arm which interacts directly with the auxiliary cam. However, a combined arrangement of the present invention overcomes this disadvantage.

The present invention further provides an energy regulator further comprising a heating element as described above for heating the bimetal element such that deflection of the bimetal element effects a switching action. The input power level of the heating element or heating effect of the heating element at which the bimetal element effects switching being determined by the position of a first cam surface upon which a first cam follower bears, the first cam follower being mechanically linked to said bimetal element, a second cam surface being mechanically integrally linked to said first cam surface and a second cam follower being arranged to bear upon said second cam surface to effect a first independent switching function at one or more predetermined regulator settings, wherein a third cam surface is also provided, mechanically integrally linked to said first and second cam surfaces and upon which a third cam follower bears for effecting a further independent switching function at one or more predetermined regulator settings.

Another advantage of the independent switching feature over other such devices is that a dual circuit control of elements can be obtained. Both line and neutral switched versions are possible. The independent operation of respective switch contact arms overcomes manufacturing problems, reduces the number of components and cost and complexity compared with devices employing simultaneous gang bar type switching arms.

The linked first, second and third cams can be in any suitable arrangement, for example linked to a slider control. However, in a preferred embodiment they are in the form of rotary cam elements, most preferably mounted on a common shaft, e.g. integral with each other.

According to an additional feature of the invention, the third cam follower is not directly attached to the contact arm which it actuates. Conveniently, such a "loose" cam follower is supported on the regulator case by support and guide means.

One piece energy regulator bimetal designs are normally associated with "face" profile type cam arrangements (see PCT Patent Application WO 93/26027) in which the bimetal is stamped from one piece and with adjustment to obtain the correct ratio of length of limbs, optimum compensation can be obtained, irrespective of bimetal constant variation.

Alternative designs such as disclosed in European Patent Specification No EP 0 194 512 A use two strips of bimetal independently mounted onto a fixed pivot arrangement, acting against an edge cam. This method is problematical in controlling deflection constant variation between different strips and detecting non deflection/delamination manufacturing problems of the compensator limb, together with obtaining a reliable rigid fixing to the pivot. This arrangement gives less than optimum compensation but improved low profile control design options.

A method of making an electrical connection to a ceramic substrate heater comprising a resistor track, a conductor pad for the resistor track, and an electrical lead making electrical connection to said conductor pad, comprises welding said lead to said conductor pad by ultrasonic welding.

A ceramic substrate thick film heater comprising a resistor track in electrical contact with a conductor pad and an electrical lead making electrical connection to said conductor pad, may be provided whereby the lead is ultrasonically welded to the conductor pad.

In one arrangement of the invention the resistive track of the thick film heater is overlaid with a ceramics material glaze to effect a parallel thermally dependent circuit structure.

Preferably, the conductor pad is made from a material comprising a noble metal, e.g. comprising silver and platinum. Preferably, the lead comprises copper or especially comprises cupronickel or nichrome. In any event, it is preferred for the electrical lead to comprise a tape or wire formed of an electrical conducting material. This can form part of an electrical connection to the clip securing the tape to the body of the regulator and/or its electrical supply terminal.

The present invention further provides an energy regulator comprising a bimetal element comprising a primary limb responsive to a heating element and a compensator limb for compensating for the effects of ambient temperature fluctuation, wherein the primary and compensator limbs are formed of a bimetal strip split lengthways from one end thereof along part of its length, the heating element being bonded in intimate thermal contact with said primary limb.

A preferred form of flexible pivot comprises a spring, preferably of the leaf spring type. Stainless steel is a preferred material for making this spring pivot. This form of pivot can eliminate the need for lubrication, and avoid backlash and friction problems associated with high ambient temperature and thermal ageing of the components.

Preferably, the primary and compensator limbs are approximately at right angles or otherwise in a mutual V configuration.

Preferably also, the compensator limb terminates in a cam follower arranged to bear upon a cam surface. To enhance the elimination of deflection constant variation, it is preferred for the cam follower to be integral with and formed of part of an end of the compensator limb. The cam surface is preferably a periphery of a cam element attached to a knob or other device for user control. Using the aforementioned spring type of pivot, the force generated by this pivot spring together with the force generated by the switch mechanism maintains and holds the compensator limb against the cam surface under all setting positions of the knob or device assisting user control, resulting in a positive location and setting of the cam. The primary limb presents a negative force at the point of operation, thus reducing bimetal stress loading. This enables high working temperatures to be obtained without permanent deformation of the bimetal element.

Preferably, a calibration feature is provided for determining the particular regulator setting, i.e. percentage output, (for a predetermined cam position) at which the energy regulator turns on or off. This may be constituted by an adjustment screw device protruding through a free end of the primary leg, terminating in an actuating member. However, such an adjustment feature could be provided elsewhere. For example, a screw adjustment with protrusion could be put through a free end of the compensator leg to bear upon the cam surface, i.e. to act as the cam follower.

According to a further aspect of the present invention, there is provided a control device comprising a bimetallic element, having an active leg on which there is mounted a heating element, and a sensor detection circuit adapted to drive one or more circuits associated with the heating element, the or each drive circuit and the heating element being in intimate thermal contact with the active leg of said bimetallic element, characterised in that the or each drive circuit includes a sensor element to which there is associated a specific thermal switching function so as to more accurately determine temperature limits associated with the appliance to be controlled.

It will be appreciated that a reduction in component count may be anticipated for standard control devices and particularly for multi-function or multi-circuit devices.

According to the invention there is provided a method of determining when high temperatures have been reached and operating control circuitry to maintain the temperature at a predetermined level or cut off a heat source when the temperature reaches a maximum operational temperature.

According to a further aspect there is provided a temperature control device whose optimised performance is set by adjusting the composition of the ceramics material, the profile of conductors, the formation of multiple circuits whether they comprise resistive tracks or conductor strips having gaps therebetween, the profile of the gap between conductors and the formation of the ceramic material.

The thermal sensors of the invention include multi-circuit arrangements which combine different profiles of conductors and different compositions of ceramics material. In one arrangement parallel gaps are provided which are overlaid with glazes of having different transition temperatures. It will be appreciated also that the sensor terminals defining the gaps need not be opposite one another but may be overlaid to form a layered sensor. A first common conductor may define a gap with a second, for example, planar conductor which is overlaid with the first and separated by a first composition of ceramics material. On top of the second conductor a second composition of ceramics material is laid and a third conductor adhered thereto. Terminals connectors are taken from the second and third conductors to realise a multi-circuit sensor.

Similarly, the heater assemblies include multi-circuit arrangements of different sizes and ratings (wattage) of resistive track so as to associate energisation of a given heater circuit with a predetermined deflection of the bimetallic element.

According to a yet further aspect of the invention there is provided a unitary temperature control device having multiple circuits each of which are switchable at discrete temperatures.

The use of the term "resistance" in respect of the parameter or characteristic which undergoes the "step change" should be taken to comprise the impedance of the ceramics material. The term "resistance" in used for convenience and as an indication of the most relevant component of the material impedance.

### Brief Description of the Drawings

The invention will now be described more particularly with reference to the accompanying drawings which show, by way of example only, several arrangements of control device as exemplifying embodiments of the invention together with sensor constructions and heater assemblies. The drawings also illustrate a method of manufacture in accordance with the invention. In the drawings:
Figures 1a and 1b are top plan views of a first embodiment of control device comprising an energy regulator having a basic single circuit connection and multiple circuits provided on the bimetallic element, respectively;
Figures 2a and 2b are top plan views of a second embodiment of control device comprising a temperature limiter having a basic single circuit connection and multiple circuits provided on the bimetallic element, respectively;
Figures 3a and 3b are top plan views of a third embodiment of control device comprising a thermostatic regulator and a substrate heater assembly incorporating a sensor enabled heater circuit;
Figures 4a to 4d are first and second scale diagrams for a control device of Figure 3a, for example, and schematic circuit diagrams of a control device with sensor, respectively;
Figure 5 is a top plan view of a fourth embodiment of control device comprising a multi-circuit thermostatic regulator;
Figures 6a and 6b illustrate sensor circuit layouts for a multi-circuit thermostatic regulator;
Figure 6c is a graph representing the temperature characteristic of a multi-circuit control device;
Figures 7a to 7c are elevations of three arrangements of a first construction of ceramic encapsulated sensor;
Figures 8a and 8b are elevations of two arrangements of a second construction of sensor comprising ceramic sensor probes;
Figure 9 is a graph representing the resistance of the ceramic of the sensors and probes against temperature;
Figure 10 is a detailed side elevation of the heater assembly and bimetallic element and the heater connection to a supply terminal;
Figure 11 shows an alternative manner of electrical connection to the ceramic substrate thick film heater of the control device shown in Figures 1a to 3a and Figure 5 and in accordance with the present invention;
Figure 12 shows a detail of the electrical connection shown in Figure 11 when implemented in the control devices depicted in Figures 1a to 3a and Figure 5;
Figures 13a to 13c are top plan views of a first and second multicircuit substrate layout and a feedback loop substrate layout utilising rivet fixing of lead out tape;
Figures 13d to 13f are top plan views, similar to those of Figures 13a to 13c, of a first and second multicircuit substrate layout and a feedback loop substrate layout utilising ultrasonic fixing of lead out tape;
Figures 14a to 14c illustrate thick film resistor circuits applied to a substrate to implement a substrate heater assembly having a second circuit or multiple circuit, respectively;
Figures 15a and 15b are plan views of wire wound alternatives to the substrate layouts illustrated in Figures 13a and 13c, for example, comprising a feedback loop winding and multicircuit windings, respectively;
Figure 16 illustrates a three stage process for forming a heater assembly;
Figure 17 is a template for drilling and scoring a substrate platter for accommodating ten heater assemblies; and
Figures 18a to 18c are templates or screens for printing conductor pads, resistance tracks and overglaze corresponding to the substrate platter template of Figure 17.

### Detailed Description of Preferred Embodiments

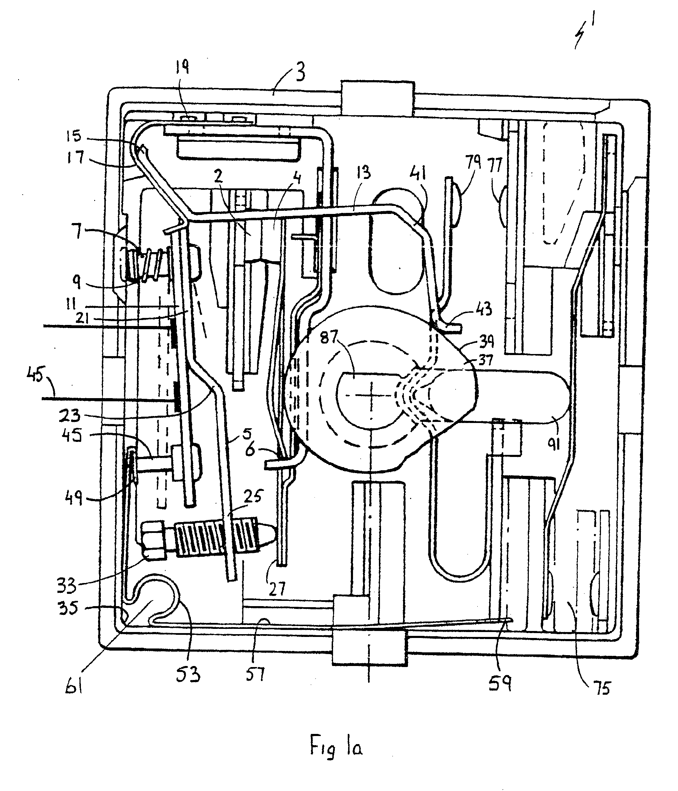

Referring to the drawings and initially to Figure 1a, there is provided a regulator denoted generally by reference numeral 1. The regulator 1 comprises a base 3 in which the constituent parts of the regulator are housed. The main part of the regulator comprises a primary bimetal leg 5 to which a ceramic substrate thick film heater assembly 11 is secured by means of an eyelet 7 and a surrounding coil spring 9. A compensator bimetal strip 13 extends at approximately right angles to the primary strip 5 and is contiguous therewith. In other words, the primary strip and compensator strip constitute separate limbs formed from a single piece of bimetal, joined by a base region 15.

The base region 15 is secured to a pivot spring 17 in the form of a leaf spring, so that the primary bimetal strip 5 and the compensator bimetal strips 13 together with the substrate heater 11 pivot together as a single rigid assembly. The pivot spring 17 is fixed to the base 3 by means of a support 19.

The primary bimetal strip 5 comprises a root portion 21 in contact with the substrate heater 11 and an oblique portion 23 extending away from the substrate heater and a distal portion 25 spaced apart from the substrate heater. The fact that only the root portion 21 is in direct contact with the substrate heater 11 maximises the differential deflection of the primary strip 5 for a unit temperature change. This is in accordance with the applicants' U. K. patent No. GB 1 201 537.

The bimetal leg 5 bears on a deflectable snap action, spring member 27 by means of the calibration screw 33 extending through an end thereof remote from the root portion 21, so that the deflection of the bimetal leg 5 results in the electrical contacts 2, 4 operating (make and break) as a function of the over centre action of the switch mechanism 6.

Calibration of the regulator to preset the precise power level (for a given user setting) at which electrical connection between the contacts 2, 4 is made or broken is effected by means of a calibration screw 33.

The regulator setting controlled by the user is set by means of a knob (not shown) mounted on a spindle 87 which a cam element 37 is rotatably mounted. The outer circumference of the cam element presents a cam surface 39.

Remote from the base region 15, the compensator strip has a bend 41 so that it is angled towards the cam element 37 and terminates in a cam follower 43 which bears against the cam surface 39. In accordance with the position of the knob, the position of the cam surface 39 contacted by the cam follower 43 alters the orientation of the compensator bimetal strip 13 relative to the pivot spring 17 and so also, the orientation of the primary bimetal strip 11 relative to the pivot spring. Thus, the position of the calibration screw 33 relative to the switch mechanism 6 is also varied.

Thus, in use, the calibration screw is used in initial set-up to calibrate the regulator as described above. Then, the user turns the knob to orientate the compensator and primary bimetal strips 13, 5 by means of the cam action. This determines the power level to the substrate heater and to the corresponding load connected across the electrical contacts 2, 4. For a given set cam/spindle position the output power would be cyclic at contacts 2, 4.

It will readily be appreciated that the temperature change as a result of electrically energising the substrate heater circuit will excite the root portion 21 of the bimetal leg 5. The advantageous lever ratio will result in the calibration screw 33 operating switch 6 to make or break contacts 2, 4, thus maintaining preset power level. However, the compensator strip 13 will compensate for ambient temperature variation.

The two limbs (primary and compensator strips) are formed from a single strip split laterally with the unsplit remnant at one end forming the base region 15 which is mounted on the pivot spring. Thus, the metal on the top side (facing the cam element 37) of the primary strip 5 is on the reverse side (not facing the cam element) of the compensator strip 13 and vice versa.

The formation of the primary and compensator strips 5, 13 from a single element substantially ensures elimination of deflection constant variations which would result if the two strips were fabricated separately. This is also aided by the fact that the cam follower 43 is integral with the compensator strip rather than a joined-on element.

In the control circuit of the regulator illustrated schematically in Figure 1a, there is provided a basic single circuit connection through the heater assembly 11, secured to the active leg of the bimetallic element, and a sensor connected in series with the heater element whether formed as a coil or as a thick film on the substrate. The sensor, which will be described in more detail hereinbelow, is disposed adjacent a heated surface, a heating element such as that connected as a load to the energy regulator, or in an oven cavity, for example. Advantageously, the sensor can be coupled in direct thermal contact with a variety of surfaces including hob glass (into which it may be imbedded) and the heating element loads themselves.

The sensor/regulator heater arrangement may be such that a normally open-circuit sensor prevents the regulator heating element being energised until the temperature adjacent the sensor is sufficient to change the sensor state to closed-circuit at which time the heating element is energised and, according to the heating cycle time, causes the bimetallic element to switch the load out of circuit. The temperature experienced by the sensor will decrease in time and this in turn causes the sensor to fall to an open-circuit R_{OFF} condition and the bimetallic element snaps back into its normal position when cooled sufficiently, thus reconnecting the load. It will be seen that the inclusion of the sensor in the circuit will alter the heating characteristic of the regulated load by preventing unwanted cyclic switching during the initial heating up phase and, according to the required set-point (normally maximum) heating parameters, allows standard cycling at full power.

Figure 1b is a schematic diagram of a regulator substantially identical to that illustrated in Figure 1a. The bimetallic element has a ceramic substrate thick film heater assembly 11 as before, however, in this construction, a pair of substrate heaters are provided, each in connection with a remote sensor via leadoff tape 45, for example. Each heater is arranged so that when energised it can deflect the active leg 5 sufficiently to cause the deflectable snap action, spring number 27 to operate the over-centre action of the switch mechanism 6. In this way the selection of how the sensors and substrate heaters interconnect can be chosen according to the particular application of the regulator. Thus, where there is a requirement for a regulator comprising an upper limit cut-out switch, in addition to the regulated power output to the load, one of the sensor/heater circuits is adapted for this role. The sensor is selected to have a specific open circuit temperature T_{ON} above which damage might result. The heater is adapted to heat the substrate quickly upon energising and a fast acting automatically resetable thermal cut-out facility is provided. In an alternative arrangement, where it is required that two regions must meet a predetermined temperature before energy cycling occurs, the two sensor/heater circuits are connected in series. In this case, neither heater will be energised until both sensors reach their respective open-circuit temperatures.

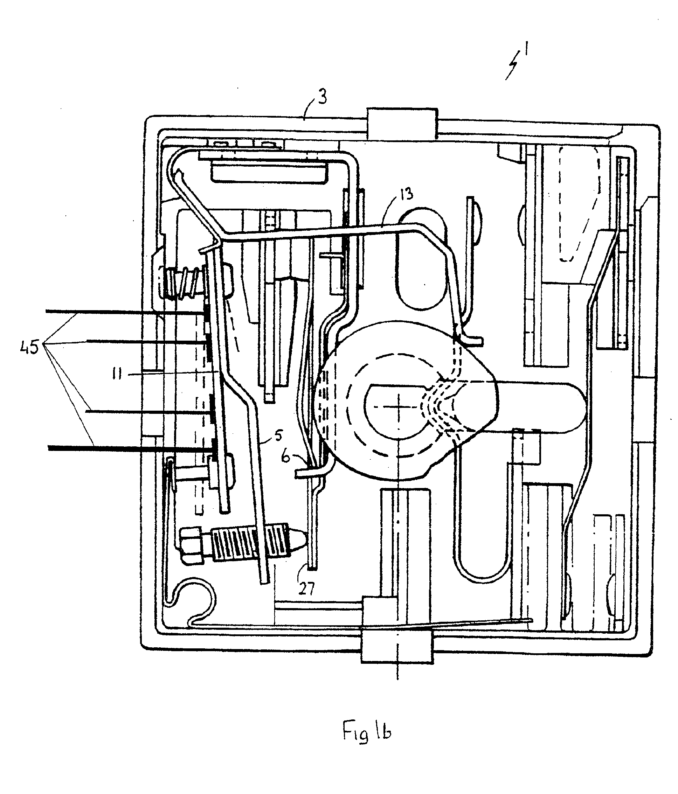

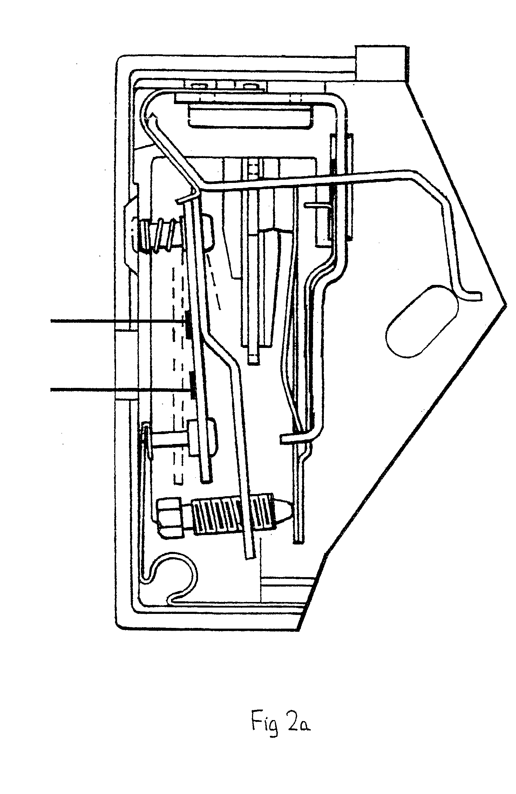

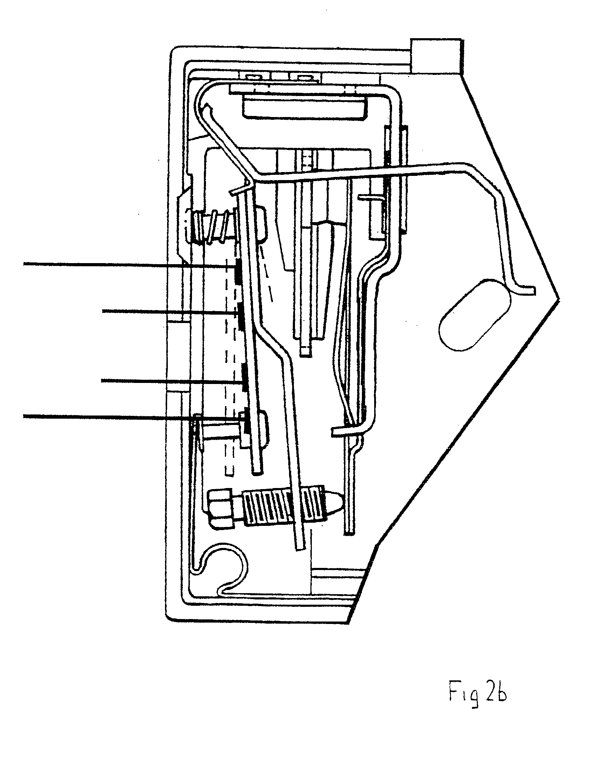

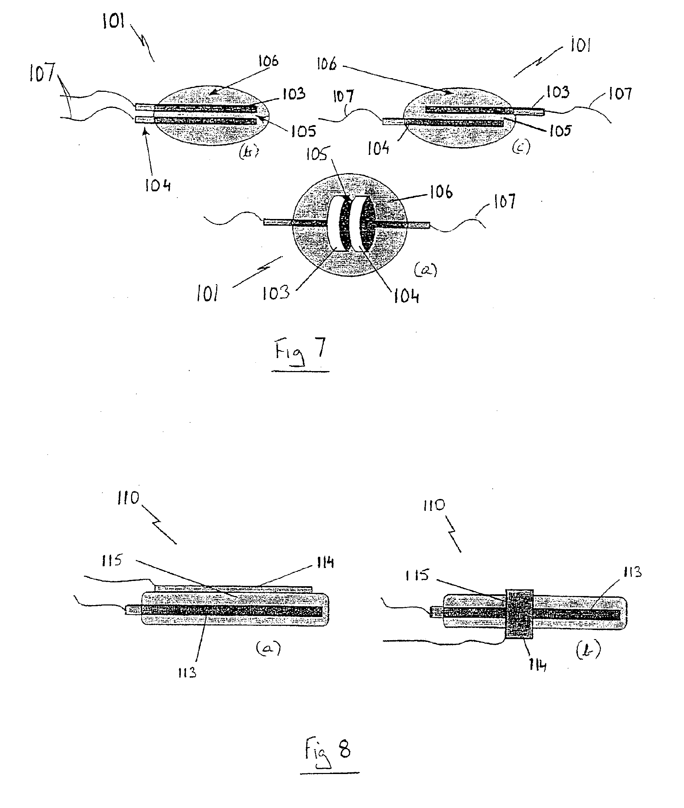

Figure 2a is a schematic diagram of a thermal limiter comprising essentially identical components to the energy regulator of Figure 1a. This arrangement is adapted to detect and shut off at a predetermined temperature selected by the construction and/or position of the sensor as will be described in more detail hereinbelow with reference to Figures 7a to 7c, Figures 8a to 8b and Figure 9. Similarly, Figure 2b illustrates a temperature limiter with a feedback loop of the type described with reference to Figure 2a.

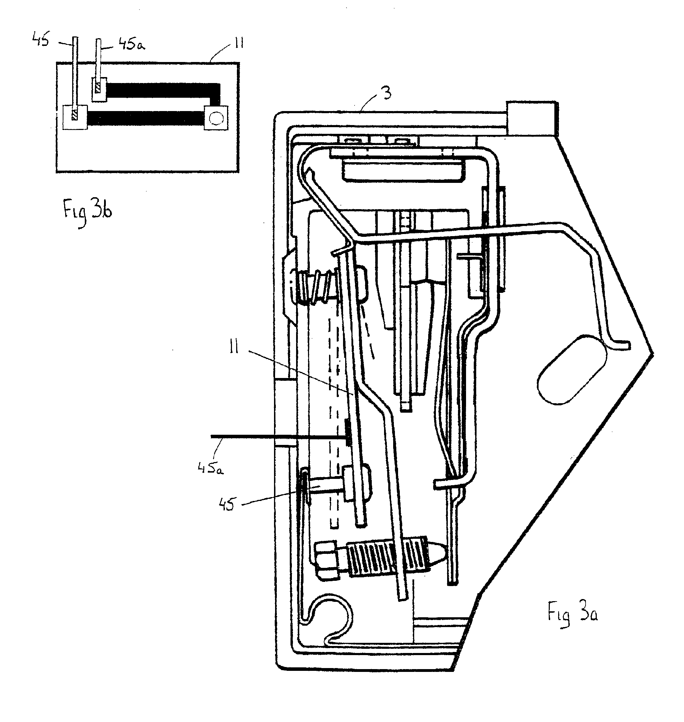

With reference to Figures 3a and 3b, it will be seen that the principles of the limiting energy regulator may be adapted to implement a thermostatic control device in which the traditional fluid filled probe and mechanical bellows are replaced by a sensor of the type advocated herein and a modified heater assembly.

It will be appreciated that the thermostatic control device of the invention is not limited to the use of a ceramics material sensor and that any suitable sensor which can directly interface with a substrate heater circuit will suffice. The sensitivity of the resultant thermostatic control device will of course depend on the sensitivity of the sensor.

The primary advantage of the control device of Figure 3a is that an expensive and unreliable hydraulic sensor and controller drive system has been replaced with a low cost, robust sensor which is directly coupled to a known, if modified, energy regulator. The modification proposed is merely the provision of a feedback loop and an additional substrate track on the substrate heater as shown in Figure 3b.

Although particular emphasis is placed here upon a thermostatic regulator, it will be appreciated that a standalone adjustable thermostat can be implemented using a single circuit substrate heater assembly.

Figures 4a to 4d illustrate the combined application of the dual circuit thermostatic energy regulator which can be realised in either of two common forms, namely: a split scale dual circuit of the type used by choice in the United Kingdom; and a full scale latched dual circuit of the type mainly used in Europe.

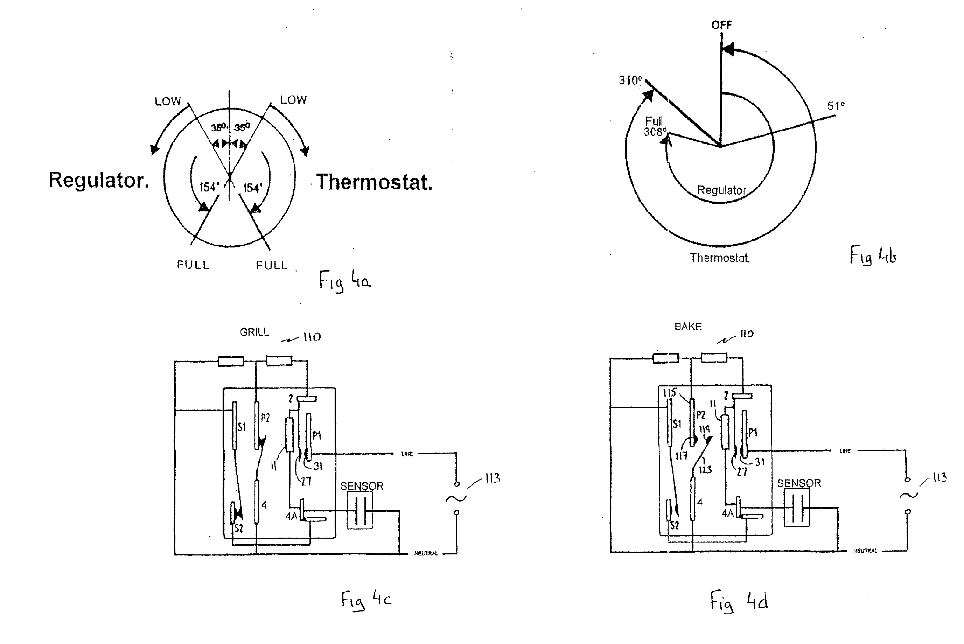

Conventionally, rotating a split scale dual circuit control in a clockwise direction energises two circuits of a grill or top oven, for example, or inner and outer rings of a hob. Similarly, rotation in an anti-clockwise direction energised only one of the split load. Although the scale or range is divided equally about the (vertical) "off' position, the control is fully rotational. In the convention latched dual circuit control, rotation in a clockwise direction energised one circuit over a functional range of 310°, as illustrated in Figure 4b. When rotated further against a spring biased stop, a second circuit is latched in and energised so that anti-clockwise rotation controls both circuits over the full rotational range until the control is returned to the "off' position where the latch is disengaged.

It will be readily appreciated that the control device of Figure 3a for example, can be realised in either split scale or latched configurations. The operation is identical in that for rotation in one direction or in the unlatched position, the control operation in the conventional manner. In the opposite direction or in the latched position the control functions as a thermostat with feedback from the sensor via the multi-circuit substrate heater device.

Figures 4c and 4d show typical circuit diagrams for using a thermostatic energy regulator according to the present invention in a domestic appliance such as an electric cooker, adapted for either the UK market and the European market.

In Figures 4c to 4d, as in Figure 1a, reference numeral 5 denotes the bimetal element and numeral 11 denotes the ceramic substrate thick film heater. Again also, numerals 2 and 4 respectively indicate the switch contacts which are opened or closed in accordance with deflection of this bimetal element. Moreover, in each of Figures 4c and 4d, numeral 110 denotes a load, for example, an electrical heating ring of a grill or top oven of a cooker, and numeral 113 denotes the main electricity supply.

In the arrangement of Figure 4c, the main supply 113, the load 110 and the regulator switch contacts are all in series. No other switching is effected. A further arrangement may include an additional switch element connected in series between the main supply 113 and a signal lamp (not shown), for example. A corresponding adaptation may be made to the arrangement of Figure 4d. The contacts open and close in response to a relevant secondary cam acting upon actuator arm 123 connected to the movable contact 4 of the pair. This can be arranged, for example to switch the signal lamp on as soon as the regulator knob (attached to the respective cams mounted on a common shaft) is moved from the "off' position. A typical shaft turning scale could comprise a (vertical) off position, low power being arranged to energise the load at (say) 35° movement clockwise, full power being achieved at 154° in the clockwise direction.

As shown in Figure 4d, and as described as a further arrangement of Figure 4c, there is an additional switch 115 with contacts 117, 119 which are switchable independently of the contacts 27, 31 of the switch actuated by the bimetal element 5.

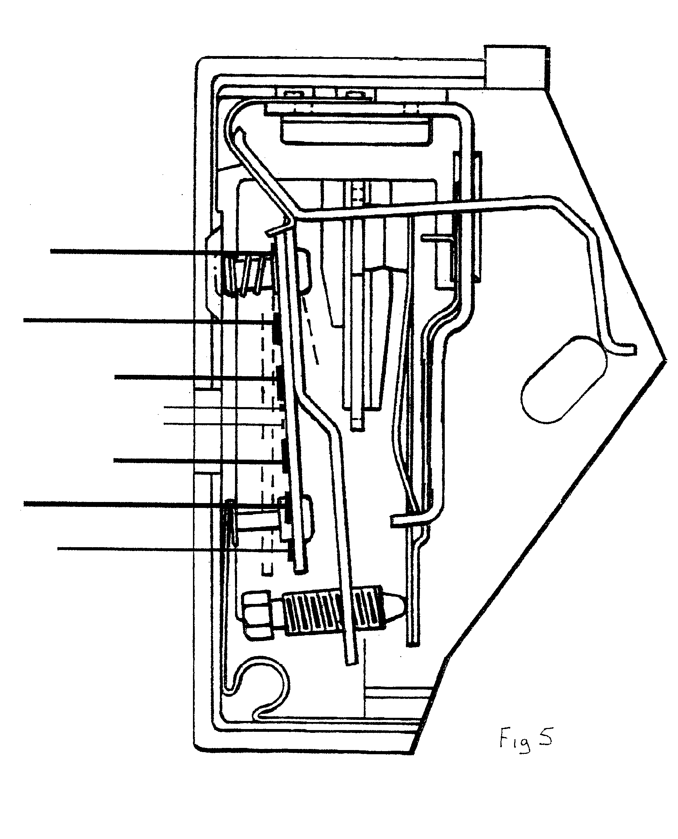

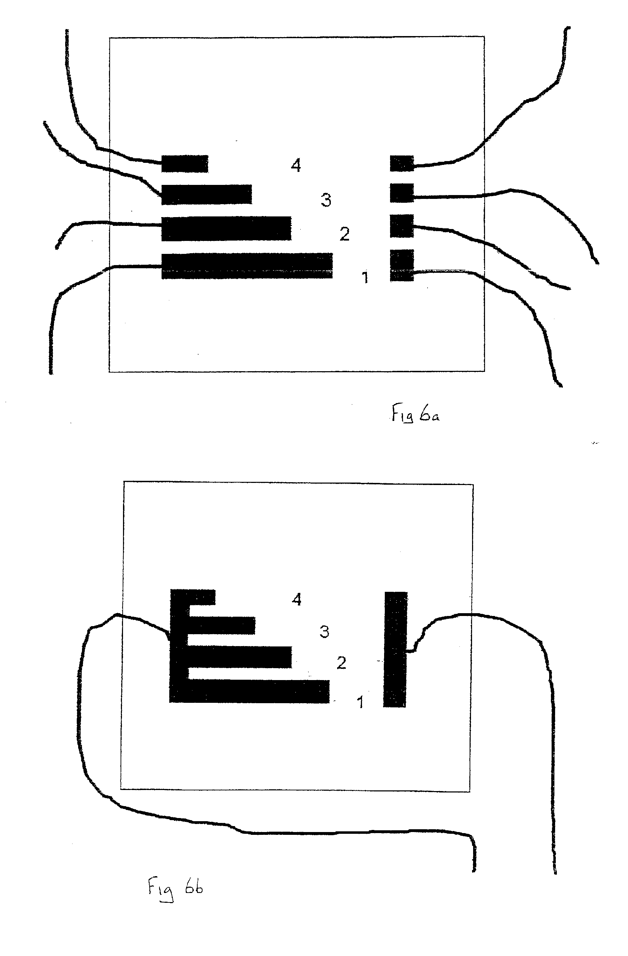

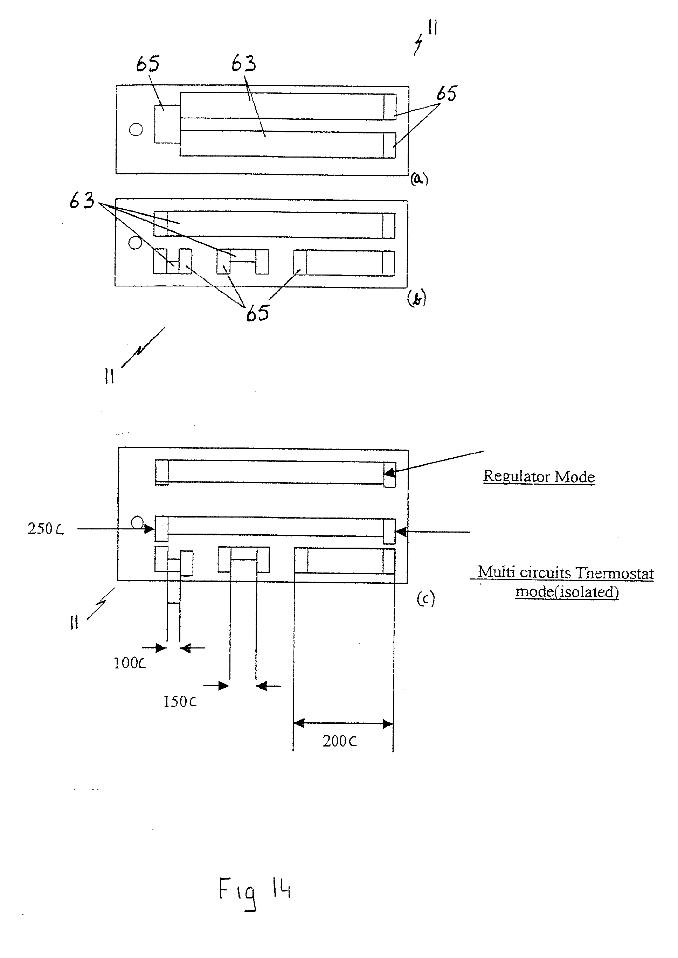

The combined energy regulator and thermostat function is realisable in a number of ways of which two will be described below with reference to Figure 5 and Figures 6a to 6c. Figure 5 illustrates a control device which includes a multi-circuit substrate heater (which is illustrated particularly with reference to Figure 14c below) which is coupled to a multiple element sensor arrangement such as that illustrated in Figure 6a. The sensor comprises a series of separately connected conductive patterns having gaps marked 1 through 4 which are overlaid with a ceramics material glaze. At given temperatures the glaze will conduct across the gaps to complete the corresponding heater circuit on the substrate heater assembly 11. This will deflect the active leg of the bimetallic element upon which the heater assembly is mounted towards a switch mechanism 6.

The same function could be implemented using the sensor layout illustrated in Figure 6b where the sensor elements are connected in parallel on a common substrate using two common connectors between which stepped gaps are provided. A separate substrate heater circuit (possible operating at a different voltage range) connected to the sensor deflects the bimetallic element 5 an amount related to the resistance of the sensor at the prevailing temperature.

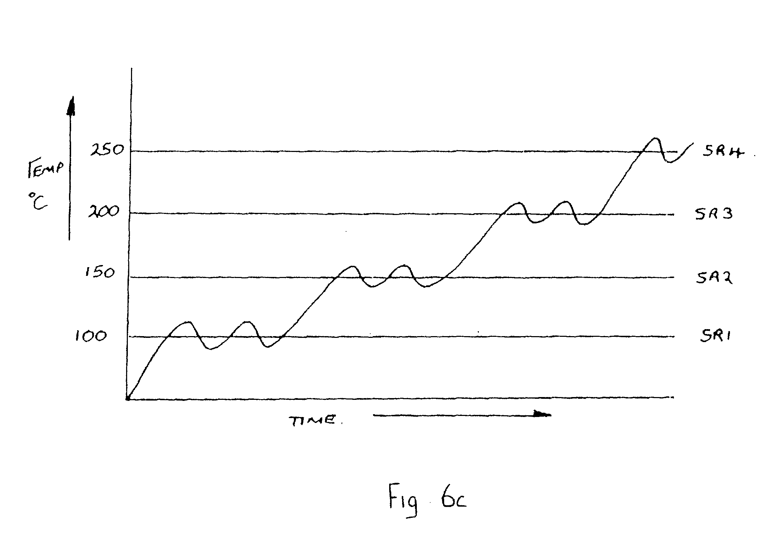

Figure 6c graphically represents the characteristic of a thermostatic regulator in accordance with the arrangement described above.

Further details of the combined energy regulator/thermostat will be described hereinbelow with reference to Figure 14c.

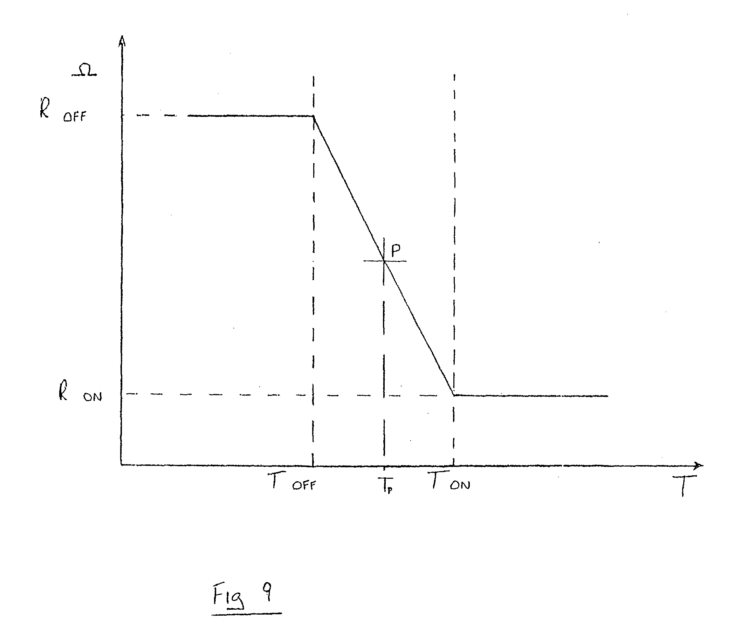

The sensor as referred to hereinabove will now be described more particularly with reference to Figures 7a to 7c, and Figures 8a and 8b. A first construction of sensor 101 comprises a pair of conductor terminals 103,104 which are separated by a gap 105 filled (and in this case encapsulated) by ceramics material 106. The conductors are coupled to a circuit via wires 107 or leadout tape 45 according to the desired application. In Figure 8a a sensor is formed as a probe 110 and comprises a first centrally disposed conductor 113 and a second coaxial conductor 114 separated therefrom by a gap 115, the conductor 114 being secured to a body of ceramics material 116 which substantially encapsulates the central conductor 113 to form the probe shape. The probe construction of Figure 8a is particularly suitable for replacing or substituting currently used ceramic hob top limiters which are known to be fragile and break easily usually when a cooking appliance is moved. Retrofitting of this construction is accomplished by adhering the external terminal conductor 114 to the underside of the ceramic hob top. The coaxial conductor 114 may be positioned at a predetermined distance along the length of the ceramics body to vary the temperature at which resistivity between the conductors begins to break down. In the probe 110 of Figure 8b, the coaxial conductor 114 is formed as a collar which can be moved along the body of the probe.

Figure 9 is a graphical representation of the characteristic of a ceramics material such as glass, including doped glasses and enamel glaze, for example. At a temperature TOFF where many traditional probes and sensor arrangements suffer reliability problems, the ceramic 106,116 of the sensor 101,110 changes state to allow current to flow against a lower resistance R_{ON}. The temperature range T_{OFF} - T_{ON} over which the sensor changes from an open circuit R_{OFF} to a low resistance R_{ON} or effectively to a closed circuit is relatively broad, for example, over 100C. The mid-point of this range P can be adjusted by sensor construction, that is, altering the proximity of the sensor conductors, and by appropriate material selection. It is envisaged that the mid-point transition temperature T_{P} can be easily adjusted between 300C and 600C.

The steep, non-linear characteristic curve of the sensor is advantageous for thermal regulation or limiting as the sensor resistance will not reside for long periods in the transition zone intermediate the effective open circuit R_{OFF} and closed circuit R_{ON} conditions. Thus, the sensor acts as a switch, operating in a binary fashion, unlike most of the substantially linear systems forming the prior art. These systems require an analogue threshold circuit with hysteresis to prevent cycling and to convert the signal from an analogue to a binary form.

The skilled addressee will appreciate that the maximum temperature to which a hob top can be exposed is not fixed but will normally lie within the range of 500C to 1000C. Similarly, the corresponding maximum oven cavity temperature is 300C. For pyrolytic, self cleaning ovens, a maximum operating temperature of 500 - 750C is required to "burn off" accumulated matter in the oven cavity. Thus, by selecting a sensor which has a mid-point transition temperature Tₚ of 600C, the sensor will be ideally suited as a hob limiter, for example. If the temperature at which the hob normally operates is 300C, this corresponds to a temperature where the resistance between the conductors will be high, resulting effectively in an open circuit R_{OFF}. Conversely, when the hob overheats, the temperature of the sensor will rise above 450C at which temperature T_{ON} the resistance between the conductors has fallen away and is effectively a closed circuit R_{ON}. In the control devices of Figures 1a to 3a and Figure 5, this is where the substrate heater quickly reacts to remove power from the load, that is, the hob surface heater.

The transitional temperature T_{P} of the sensor exemplifying the invention is modifiable by altering the physical characteristics of the resistive tracks or conductive pads or the chemical make-up of the ceramics material. Where the maximum or full range temperature is set at 300C, a mid-point transition temperature of 250 would be required. Where the transition interval (T_{ON}- T_{OFF}) is no greater than approximately 50C, a mid-point transition temperature of 275 may be chosen.

It is furthermore possible to reduce the mid-point transition temperature Tₚ to between 70C and 120C, for example. The ceramics material used requires high concentration of a doping element (usually lithium or boron) and the surface area of the conductor terminals must be increased for example by overlayering or by forming interleaving fingers (interdigitating) between the terminals.

The major advantages provided by such a sensor are that it is inexpensive, robust, reliable, easily interfaced with existing control devices and systems and will fail-safe.

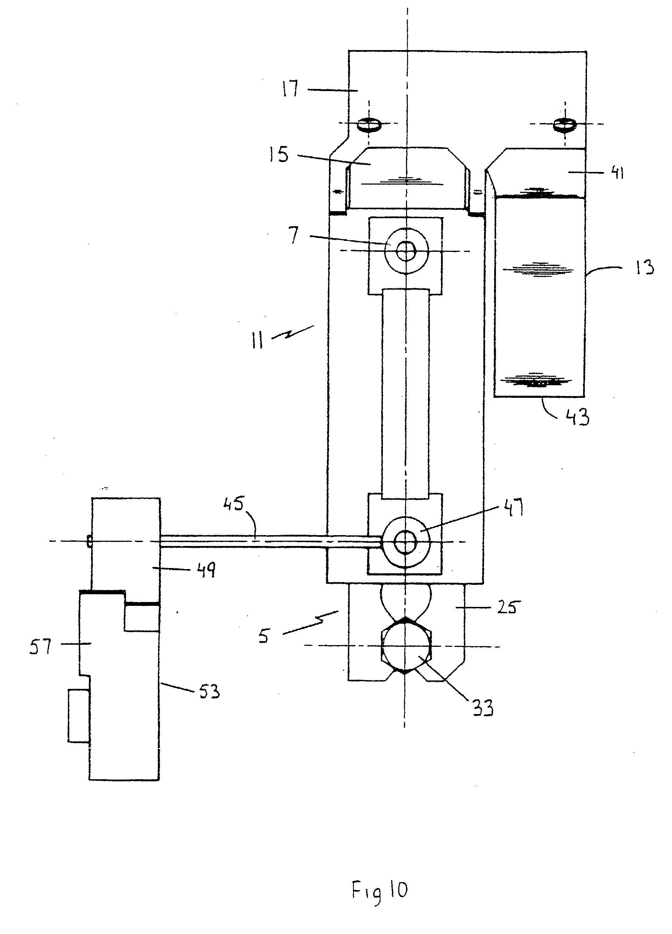

Figure 10 is a detailed elevation of the substrate heater 11 as mounted on the active leg or primary strip 5 of a bimetallic element which includes the compensatory strip 13 which extends from a base region 15 which it shares with the primary strip 5. The primary strip 5 and compensatory strip 13 are formed from a single piece of bimetal which also acts as a conductor which is coupled via a pivot spring 17 to the support 19 which forms part of a supply terminal. As also illustrated in Figure 1a, the ceramic substrate of the heater assembly 11 is secured at one end to the root portion 21 of the bimetal primary strip 5 by a rivet or eyelet 7. At the other end, a rivet 47 electrically couples the heater via a leadout tape 45. The leadout tape 45 is in turn retained by a fold-back bend 49 at one end of a link clip 53 which connects to a supply terminal 59 at its other end. At the free or distal end 25 of the primary bimetal strip 5, a threaded or appropriately formed aperture is provided for accepting the calibration screw 33 which acts upon the switch mechanism 6 operated by the deflection of the bimetallic element.

Referring again to Figure 1a, electrical connection is made to the substrate heater 11 by way of a cupronickel or nichrome tape 45, or a tape of similar material, via a rivet connector 47. In order to allow the substrate heater 11 and primary strip 5 to pivot freely without unduly stressing this electrical connection, the following features are provided, namely, a fold-back bend 49 at the end of a link clip 53 formed between the bend 49, in a corner 35 of the base 3 so that the remainder 57 of the link clip connecting to a supply terminal 59 is sprung onto a boss 61 in the base.

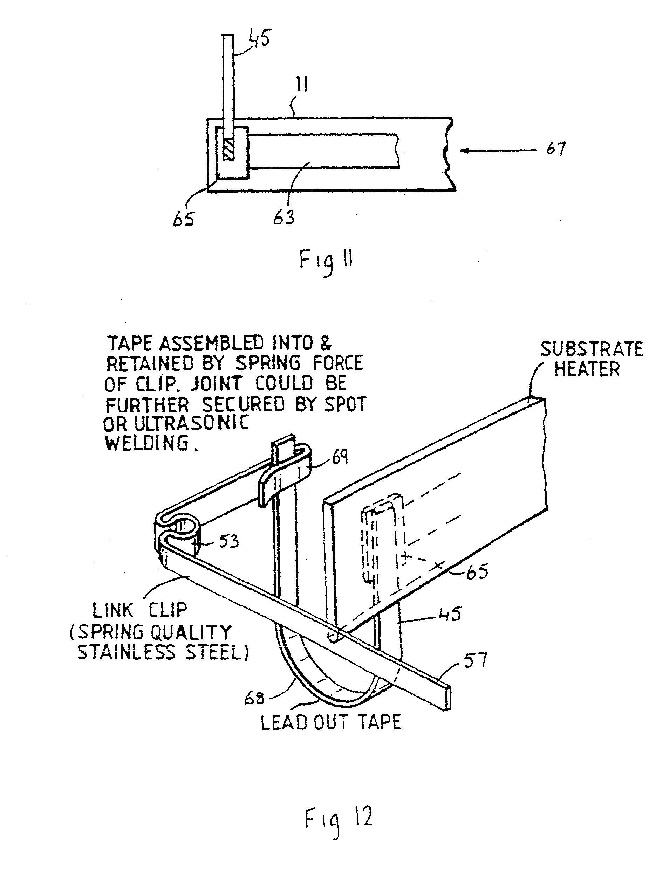

An alternative but preferred method of welding the tape 45 to the ceramic substrate thick film heater 11 is shown in Figure 11.

The resistor track 63 of the ceramic substrate thick film heater is electrically connected to a conductor pad 65. The tape 45 is welded to the conductor pad by ultrasonic welding. The conductor pad is made of a silver/platinum alloy. The ultrasonic energy is applied generally in the direction of the arrow defined by numeral 67. This weld is capable of operating at an ambient temperature in excess of 380°C without oxidation or deterioration with age.

As shown in more detail in Figure 12, the tape 45 is connected to the link clip 53 by means of a U-shaped portion 68 and a clip arrangement 69 which could be strengthened by means of spot welding or ultrasonic welding.

It will be appreciated by the skilled reader that the substrate heater assembly 11 may be modified or substituted to provide a control device having parameters which are selectable by altering the layout, interconnection or function of the substrate mounted circuit. The connection techniques described hereinabove can also be applied to the layouts which will be detailed below.

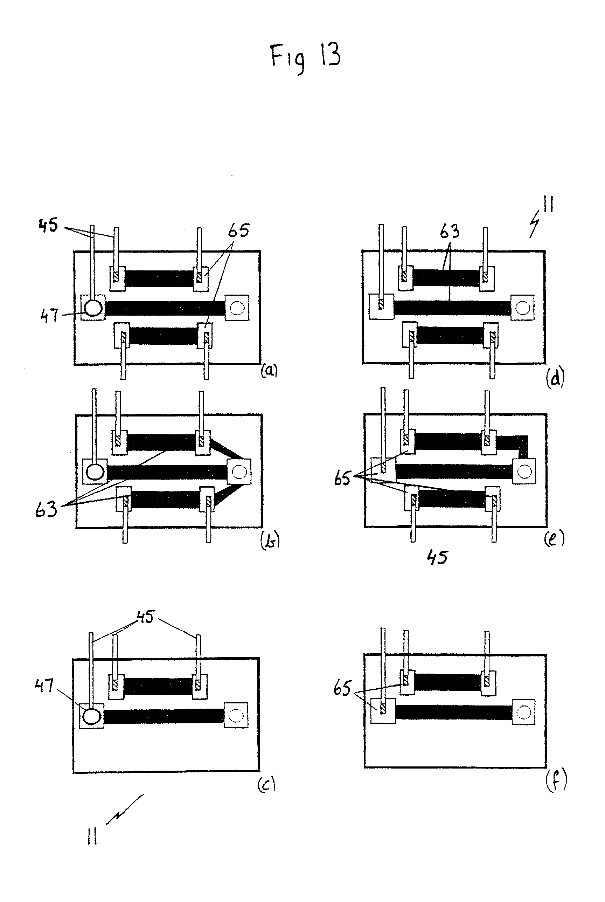

Figures 13a to 13c illustrate substrate layouts which include a thick film heater having a weld area which is connected to a leadout tape 45 by a rivet 47. In Figure 13c, two other circuits are provided on the substrate which are optionally connected to a switch or sensor via tape welded to conductor pads 65. The additional circuits are optionally connected to the heater circuit either in parallel or in series according to the application. A single feedback loop is illustrated on the substrate of Figure 13c. Figures 13d to 13e are substrate layouts identical to those shown in Figures 13a to 13c, respectively, in which the rivet coupling of the leadout tape 45 is substituted by an ultrasonic weld or similar to rationalise the manufacturing steps necessary for constructing the substrate heater assembly 11, as modified.

Figures 14a to 14c illustrate a ceramic substrate with thick film resistor tracks and conductor pads printed and fired onto the surface. In the layout of Figure 14a a second resistor track is provided as a heater operating at a lower wattage value to drive the bimetal strip to open the switch mechanism 6. This second circuit, which is connected in common with the first heater circuit, may be adapted to switch out the load when a glass hob temperature reaches 700C for example. Under normal circumstances the second circuit would be inactive, hence control at higher power settings would be improved with possible elimination of the undesired cyclic operation during initial heat-up. It should be noted that the time constant to 700C on the top of the hob glass would be dependent on bimetal deflection and not the element/limiter temperature gradient.

The connected sensor would activate the second heats circuit but would not switch the power to the hob heating element until the primary circuit had reached its relative deflection for the normal 100% power level setting. It will be seen that this arrangement will not "fail-safe", however, the second circuit may be designed to achieve the bimetal deflection to independently isolate the hob heating element, if the primary circuit fails.

Fail-safe provisions can be incorporated into the substrate circuits either by using multiple isolated independent circuits on the substrate as illustrated in Figure 14b.

As with the substrate layout of Figure 14b, the layout of Figure 14c is of particular utility for implementing a combined energy regulator/thermostat. The substrate 11 has mounted thereon a first full length resistance track heater for realising the regulator mode. A second full length resistance track heater is rated for deflection when a temperature of 250C is reached. Additional tracks are formed to implement set deflection distances for temperatures of 100C, 150C and 200C, for example. The thermostat mode heaters are isolated at least from the regulator heater so that a range of working voltages may be used with the device with the higher voltages being reserved for the regulator and load side of the control device and lower voltages being used for the sensor circuits. Sensor circuit voltages of 24V and regulator circuit voltages of 250 - 400V are considered.

The standard thermostatic control has a cyclic function giving a fixed step and variable range between 70C and 350C depending on the selected set position. For a fixed step control the range of 100C, 150C, 200C and 250C have been suggested above. These temperatures should in no way be considered limiting of the invention.

A variable (infinitely variable) range of 70C to 350C is realisable with the appropriate sensor structure to provide continuous feedback.

The exemplifying sensor of the invention has a step layout to act as a switch or resistance change as the pre-selected temperatures are encountered. The energy regulator/thermostat is set to give a continuous percentage output dependent on the CAM position or distance the bimetallic element 5 is required to travel before the snap-switch mechanism 6 is activated.

In the thermostat mode, four fixed positions provide thermostat control for a top oven in combination with the energy regulator function as follows:

| **Oven Temp** | **Bimetal deflection** | **Bimetal Wattage** | **Sensor resistance** |
|---|---|---|---|
| 100C | 0.3mm | 0.5W | 115k |
| 150C | 0.6mm | 1.0W | 41k |
| 200C | 0.9mm | 2.0W | 12k |
| 250C | 1.2mm | 3.0W | 3k |

The above figures are given by way of illustration only and the following assumptions are made:
- A 50% power level taken as an example.
- The substrate heater is in series with the stepped thermal glass sensor.
- The oven cavity is cold.
- With the control set to the 50% output position (now related to a finite temperature) the element/oven circuits are energised.
- As the sensor is cold and the substrate heater is basically open circuit, the energy regulator remains fully energised.
- As the temperature increases, the resistance on the glass sensor and conducting steps are reached; the bimetallic heater is energised.
- As the predetermined temperature level required to activate the sensor switch or respective resistance is reached, the power level on the bimetal causes a resultant deflection to activate the power snap switch.
- At this point a cooling cycle results.
- The snap switch remakes the circuit dependent on the cooling curve of the bimetal and the process is subsequently repeated.
- The stepped sensor is calibrated to give fixed temperature settings of 100, 150, 200 and 250C.

It will be appreciated that the separate heaters can be energised separately or in combination to effect the required deflection.

The substrate circuits may also be implemented by coil windings as illustrated in Figures 15a and 15b. The first wire wound alternative comprises a feedback loop and a circuit for connection to a sensor mounted in a glass hob top. Figure 15b shows a multi circuit layout corresponding to that of, for example Figure 13a or 13c above.

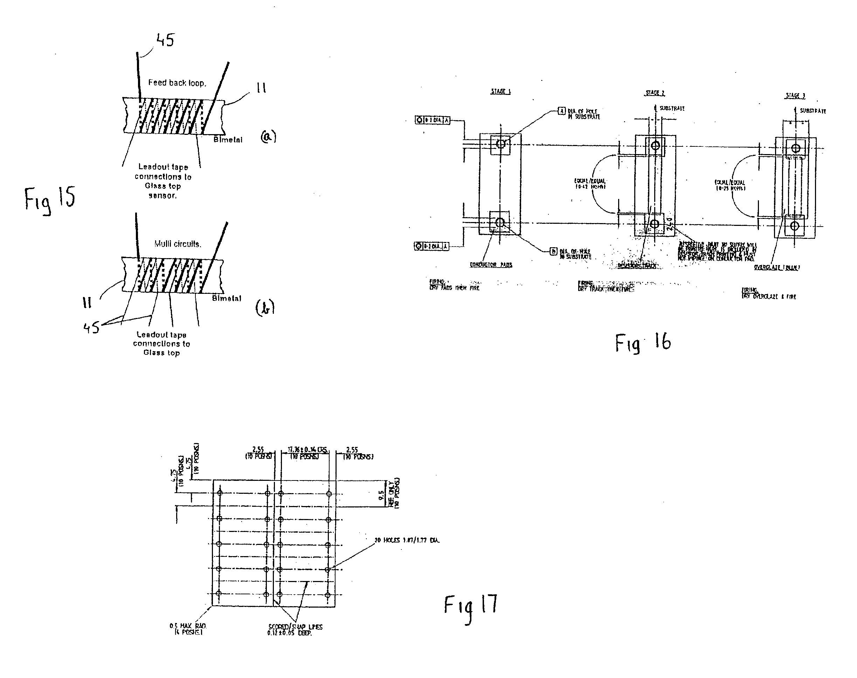

Referring now to Figure 16, a three stage process for forming the substrate heater assembly described with reference to a single track or circuit, however, it will be understood that the principles apply identically to the formation of such assemblies having additional circuits thereon. The substrate is pre-drilled prior to the printing of a pair of conductor pads which are subsequently dried and fired. A resistor track is then printed between the conductor pads, overlapping with the pads a pre-determined area to ensure electrical connection. At the same time the resistor track is laid, a part identity number is printed proximal to but not impinging on the conductor pad. When the track has been dried and fired, an overglaze is screened onto the assembly to protect the track and the overlap region while leaving the majority of the conductor pad available for connection via rivet or leadout tape, fixed appropriately, for example by ultrasonic welding.

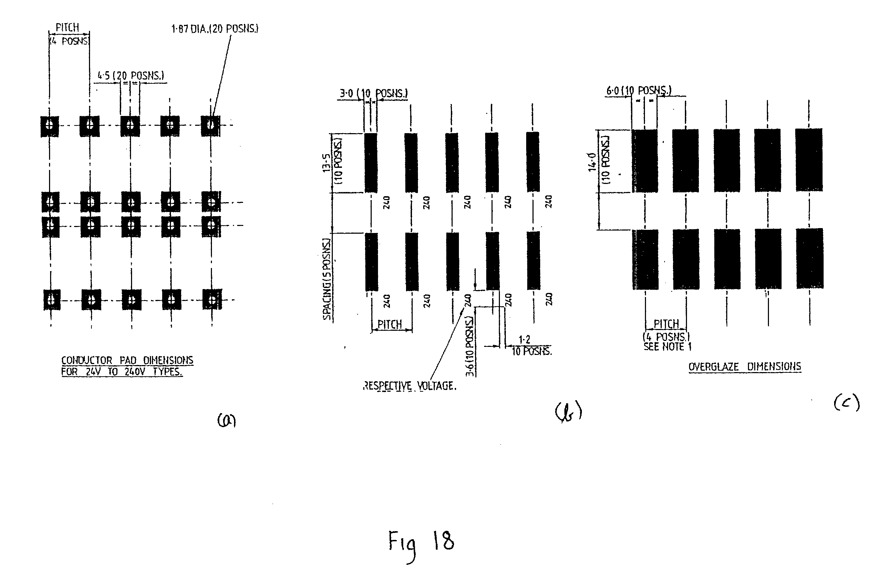

Finally, with reference to Figures 17 and 18a to 18c, the heater assembly circuits are normally made in batches of not less than 10. As shown in Figure 17, a substrate platter is pre-drilled with a pair of holes on each individual substrate and score lines are cut into the platter to aid subsequent separation of the completed heater assemblies. The pitch and position of the conductor pads are set out in a screen or template as shown in Figure 18a and corresponding screens or templates for printing the resistor tracks and overglaze are illustrated in Figures 18b and 18c, respectively.

The printing screen may be substituted easily for a screen corresponding to any one or more of the exemplary resistive track layouts described above. In this way the method of manufacture may be modified to produce a wide variety of heater assembly structures.

In use, the sensor is adapted to be positioned in direct thermal contact with a heat source, a heated surface to be regulated or an element having a maximum operating temperature.

Selection of the correct ceramics material, for example, the doping concentration in a lithium glass or a boro-silicate glass will determine the suitability of a sensor for direct thermal contact use. It will be appreciated that certain applications of the invention will not be suited to direct contact of the sensor and that radiated heat or ambient temperature within an enclosure may provide a better indication of correct operation of an appliance. Furthermore, certain sensor constructions are mountable on the surface of an enclosure and regulation or maximum temperature limiting may be realised by measuring the temperature, for example, on the outer surface of an enclosure wall or an observation window.

The sensor circuits may be realised on the same piece of substrate as the heater circuits thereby allowing the control device to be (substantially) encapsulated within the control housing 3.

The sensor and/or heater circuit is conveniently incorporated into mains voltage circuits, lower voltage circuits (say 24V) and logic level (5V) circuits and it will be appreciated that a sensor may be interfaced to a detection circuit, an energising circuit or a load in series or in parallel according to the intended use or switching function. Similarly, combinations of series and parallel connections may be used to realise separate functions within an appliance. Logic circuit interfaces are facilitated by combinations of sensors to implement, for example, an OR or EXCLUSIVE-OR circuit.

It will be readily appreciated by the skilled reader that where there is close separation of the conductors (electrodes), AC excitation of the circuit is preferred. The use of DC is known to encourage dendric growth of metal spikes between the gaps, which will eventually short the sensor. The use of DC is thought to polarise or align the ceramic material molecules when the material is hot and consequently more fluid. The alignment will be maintained if excitation continues during the cooling phase. This results in a reduced resistance (impedance) of the sensor at temperatures (T_{OFF}) where an effective open circuit is required. Where the low temperature resistance is insufficiently high, the sensor is deemed to have failed. This alignment does not occur with AC excitation and such excitation applied during a high temperature heating cycle can reverse the alignment caused by DC excitation, effectively repairing failed sensors.

In the light of this disclosure, modification of the described embodiments, as well as other embodiments, will now become apparent to persons skilled in this art.

It will of course be understood that the invention is not limited to the specific details described herein, which are given by way of example only, and that various modifications and alterations are possible within the scope of the invention.

## Claims

1. A control device having a switch mechanism, **characterised in that** the switch mechanism is deflectable from one position to another under the action of a thermal sensor which comprises first and second conductors separated by a ceramics material which is responsive to heat whereby a parameter of the ceramics material undergoes a step change between a first temperature range and a second temperature range.

2. A control device as claimed in claim 1, **characterised in that** the ceramics material has a first resistance value at temperatures consistent with the absence of applied heat or an acceptable operating level of applied heat and a second resistance value in the presence of temperatures consistent with a maximum or near maximum required output of a heating element or heating surface.

3. A control device as claimed in claim 1 or claim 2, **characterised in that**, in absence of applied heat, the resistance of the sensor is the electrical equivalent of an open circuit and, in presence of elevated temperatures corresponding to the maximum or near maximum required output, the sensor resistance is equivalent to a closed or short circuit.

4. A control device as claimed in any one of the preceding claims, **characterised in that** the sensor is in close thermal contact with a heating surface for which an over-limit temperature is to be monitored.

5. A control device as claimed in any one of the preceding claims, **characterised in that** the conductors comprise a common first conductor disposed from at least two or more second conductors, each second conductor being profiled or positioned to "switch" to or electrically communicate with the common conductor at discrete temperature values.

6. A control device as claimed in claim 5, **characterised in that** the discrete temperature values are disparate temperatures values, one being in the range of 500 - 750C and another being in the range 70 - 150C, each range having a transition temperature defined as the temperature range over which the step change from a first temperature range to a second temperature range occurs and is in the region of 100C, the midpoint of the transition temperature being adjustable by conductor and/or conductor path construction and ceramic material selection between 300C and 600C.

7. A control device as claimed in any one of the preceding claims, **characterised in that** the ceramic material is a doped glass which begins to conduct within the temperature range of between approximately 350C and 700C.

8. A control device as claimed in any one of the preceding claims, **characterised in that** the switch mechanism comprises a bimetallic element, having an active leg on which there is mounted a heater assembly including a heating element, and a sensor adapted to drive one or more circuits associated with the heating element, the or each heater assembly circuit being in intimate thermal contact with the active leg of said bimetallic element, the sensor including at least one sensor element to which there is associated a specific thermal switching function so as to more accurately determine temperature limits or values associated with the appliance to be controlled or the use thereof.

9. A control device as claimed in claim 8, **characterised in that** the heater assembly comprises at least one heater circuit comprising two terminal conductors between which there is laid a resistive track which when energised radiates sufficient heat to deflect the active leg of the bimetallic element a pre-determined distance, which is related to the rating of the track, the term "rating" being consistent with the wattage of the heater formed by the resistive track which in turn is related to the applied voltage and the actual resistance between the terminal conductors.

10. A control device as claimed in claim 8 or claim 9, **characterised in that** the heater circuit includes a ceramics material overglaze to protect the resistive track and, more particularly, to realise a thermal limiter within the heater circuit, whereby the overglaze will "short out" the heater should a thermal limit be reached.

11. A control device as claimed in claim 8 or claim 9, **characterised in that** the sensor comprises a multi-circuit sensor element, each sensor element being adapted to drive one or more circuits associated with the heater assembly so as to effect deflection of the active leg of the bimetallic element to which the heater assembly is mounted, thereby realising a switching function over a range of temperatures by associating activation of the driven heater assembly circuits with deflection of the bimetallic element.

12. A control device as claimed in any one of the preceding claims, **characterised in that** the control device includes a thermal limiter comprising a bimetallic element having an active primary limb on which there is mounted a heating element which is arranged in series connection with a sensor of the type comprising at least two terminals separated by a ceramics material, the ceramics material having a first resistance value associated with a safe thermal range and a second resistance value disparate from the first and associated with an over-limit temperature, the second resistance value being such to effectively form a closed circuit, thereby energising the heating element and deflecting the bimetallic element.

13. A control device as claimed in claim 12, **characterised in that** the optimised performance of the thermal switching function is set by adjusting any one or more of the composition of ceramic material, the profile of conductors, the profile of the gap between the conductors and the formation of the ceramic material.

14. A method of manufacturing a thermally limited heater assembly, the method comprising:
selecting a substrate;
forming at least first and second conductors and associated terminals on the substrate;
defining between said first and second conductors, at least one heater element;
overlaying said at least one heater element with a ceramics material which is responsive to heat so that a parameter of said ceramics material undergoes a step change between a first temperature range and a second temperature range; and
firing the ceramics material.

15. A method of manufacturing a thermally limited heater as claimed in claim 14, **characterised in that** the or each heater element is defined by a resistive track which is laid between the at least first and second conductors, the number and size of track being defined by a formation technique selected from sceen printing, where alteration of the track may be effected by changing a screen printing template, etching and laser trimming, amongst others.

16. A control device substantially as herein described, with reference to and as shown in the accompanying drawings; a thermal sensor substantially as herein described, with reference to and as shown in Figures 7a to 8b of the accompanying drawings; a modified heater assembly incorporating a thermal sensor to provide over-temperature control substantially as herein described, with reference to and as shown in Figures 13a to 14c of the accompanying drawings; or a method of manufacturing a thermally limited heater assembly substantially as herein described, with reference to and as shown in Figures 15a to 18c of the accompanying drawings.
